# EUROPEAN PATENT APPLICATION

(11) **EP 2 611 007 A2**
(43) Date of publication of application: **03.07.2013**
(21) Application number: 12008614.5
(22) Date of filing: 27.12.2012
(51) Int. Cl.: H02K 16/04, H02K 19/10, H02K 55/02

(54) **A superconductive synchronous motor generator**

(30) Priority: 27.12.2011 IT MI20112386
(71) Applicant: Phase Motion Control S.p.A., 16141 Genova (IT)
(72) Inventor: Venturini, Marco, 16145 Genova (GE) (IT)
(74) Representative: Monti, Umberto

(57) **Abstract**

A superconductive synchronous motor comprising static superconductive windings (12) to generate an intense, static, multipole axial magnetic field over a wide airgap cooperating with axial, ironless armature windings that rotate. The motor generator includes two multipole spaced-apart magnet stators (1, 2), housed in vacuum containers (13) and coaxial with the motor axis (X), a disc-shaped rotor (3) coaxially located between said stators (1, 2), with a machine shaft (5) mechanically connected to said disc-shaped rotor (3) and equipped with a set of slip rings (11) connected to said windings (12) to make available outside the generator the EMF generated on the rotor coils (31,32), respectively to apply a supply voltage to the motor (Fig. 1).

## Description

The present invention refers to electromotive equipments and more particularly to motors or generators that are particularly suitable for converting mechanical power into electric power and vice versa working at low speed.

Applications of this kind are requested in large eolic apparatuses, or in large lifting equipments such as cranes for drilling wells, that usually dictate the use of large and bulky mechanical gearings for multiplication (or reduction) of the low shaft speed that is typical of the specific application to a higher operation speed for which the standard electric machines are built in view of their efficiency. In the following particular reference will be made to eolic (wind) equipments, but this is not to be construed as a limitation of the invention.

Many attempts have been made to build generators and motors of large size rotating at low speed in order to take advantage of the latest design developments in the field of the permanent magnets and the electric machines, with the purpose to reduce the size and the cost of these equipments which are intrinsically very large just because of their low speed.

The physical dimensions of electric machines are generally dictated by the value of the delivered/applied torque, and not by the power which is being converted. Thus, for a given nominal power, the dimensions of the generator or motor are inversely proportional to its nominal speed. More particularly, the large power generators, exploiting either wind or tides, operate at very low speed, and the larger is the wind plant the lower is the speed because of the increasing length of the turbine blades. As a consequence, the increasing size and the increasing problems in the design of direct-coupling generators for the largest eolic equipments render the conventional choices impracticable. As an example, present-day directly-connected eolic generators in the 3 MWs class have typical dimensions of a few meters of diameter and weights of some tens of tons. The newer class of eolic equipments which is currently under development would require generators in the 5-10 MWs range. With the conventional technology, their mere size would constitute a fundamental limitation in designing an eolic plant, in view of both the cost and of the mass to be lifted to the top of a wind tower, and of the additional project constraints imposed over the other components of the system by such a large mass.

Since the resistivity of the conductors is one of the two main causes of losses in electric machines (the other being the losses in the magnetic core), it has been suggested to realize high performances electric machines - both motors and generators - using superconductors, i.e. particular materials that exhibit a complete loss of electric resistance when maintained at very low temperatures, for instance some degrees Kelvin (°K). Nevertheless, the difficulties to maintain the whole electric machine with rotating parts at very low temperatures, has prevented until now the replacement of the traditional copper windings with windings that employ superconductive wires.

As an example of such difficulties JP 3 289344 A (Aisin Seiki) discloses a superconductive motor with a disc-shaped rotor equipped with concentric Liquid Helium and Liquid Nitrogen containers for cooling. The reference aims to reduce radiation and discloses no features of said rotor. As a matter of fact, the solution proposed by JP 3 289344 demonstrates the extreme complexity of providing a highly refrigerated superconductive winding in close proximity to a lossy rotor, which is not described as a matter of fact. No practical construction of superconductive motors or generators is known to date.

Further motives in this respect are:
the complexity of maintaining the superconductive wire at extremely low temperatures, this task usually involving the use of liquid helium that in turn asks for complexes and expensive cooling equipments,
whereas on the other hand superconductors operating at significantly higher temperatures (for instance that of the liquid nitrogen) are very brittle, expensive and do not withstand strong magnetic fields;
   - the brittleness of most superconductive cables, as well as the modified and reduced, mechanical properties of most materials at very low temperatures, which make quite difficult to use the superconductors for armature windings;
   - the fact that the superconductors cannot be bent around very small bending radiuses and therefore tend to dictate armature designs that are not efficient;
   - the difficulty to carry out the junction between the superconductive cable and suitable terminals that are at environment temperature, which junctions must both allow the passage of high currents - of the order of thousands of Amperes - and to provide an extremely high insulation from a thermal point of view in order to limit the size of the cryogenic equipment;
   - in case of simple realization of the "permanent magnet" portion of the machine, the heat produced in the windings by the armature reaction of a rotor, which heat - because of the hysteresis losses and leakage currents in the conductor - is likely to bring the superconductor in a condition of resistive conduction which would be destructive.

Until now the above limits and drawbacks have prevented the practical construction of electric machines using superconductors instead of the traditional copper or aluminum windings.

The object of the present invention is therefore to overcome the above mentioned drawbacks of the prior art.

The invention overcomes these limitations through an electric machine (motor or generator) rotating at low rotating speed and with substantially smaller size in comparison to the conventional designs, by using novel and smart superconductors material arrangements.

This object is achieved by a generator/motor having the characteristics of the main claim. Developments of the present invention are recited in the dependent claims.

It is to be preliminary remembered that superconductor materials magnets have recently been developed, that are based on magnesium diboride (MgB₂), this latter being a simple ionic binary compound that has proven to be a quite inexpensive and useful superconducting material. Namely magnesium diboride (MgB₂) becomes superconducting at 39 °Kelvin, i.e. it exhibits one of the highest known transition temperatures (Tc) of any metallic (i.e. non ceramic) superconductor. Higher temperatures superconductors based on ceramic composites proved to be too brittle for practical use.

Magnesium diboride superconducting wires have recently been employed in making superconductive magnets for MRI (Magnetic Resonance Imaging). In such applications, the required low temperatures (about 10-15 °K) are not as low as that required by the traditional niobium wires and allows the use of conductive cooling with a cryocooler, i.e., without requiring liquid helium for their operation, although a vacuum chamber is still necessary.

Exemplary embodiments and advantages of the present invention are described in the following with reference to the attached drawings that, for greater clarity, are neither in scale nor in proportion.

In the drawings:
Fig. 1 is a schematic diagram illustrating a motor generator according to the invention;
Fig.s 2 and 3 illustrate with more details the rotor;
Fig. 4 illustrates another embodiment of the invention; and
Fig. 5 schematically illustrates an arrangement for not permanently connecting the windings (12) with a DC source.

In all the drawings the same references indicate equal or functionally equivalent components. In the following the terms radial and axial are referred to the axis of the equipment indicated with X.

The invention will now be described with reference to the Figures from 1 to 4, that illustrate a three-phase motor (or a generator).

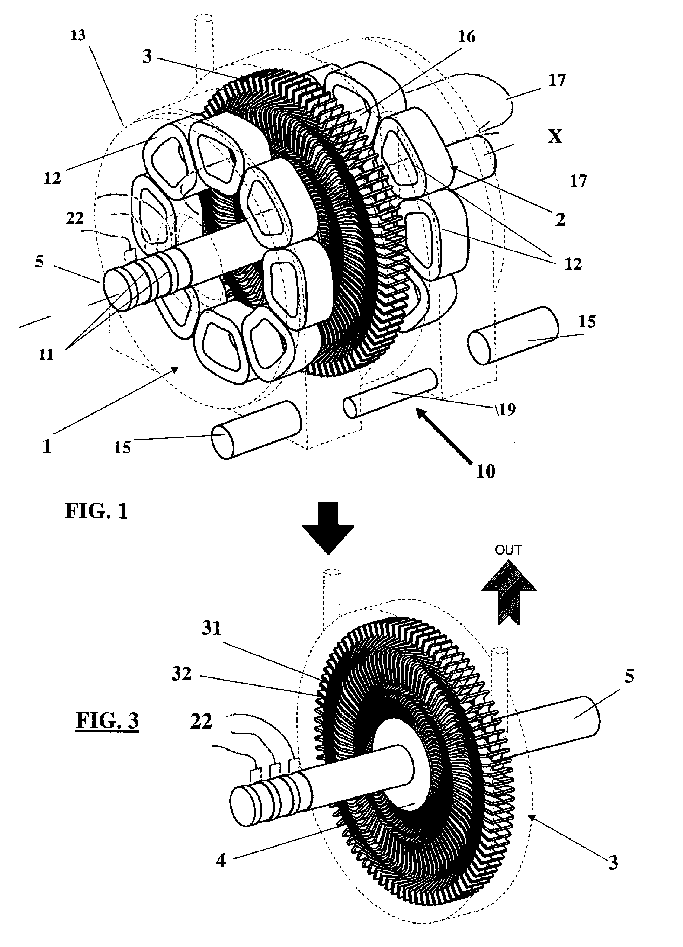

As shown in Fig. 1, an embodiment of a generator or motor 10 according to the invention includes two coaxial multi-pole magnet stators 1, 2 with an airgap between them, and a discoid rotor 3 discoid coaxially positioned between them and mechanically connected to the machine motor shaft 5.

Each stator 1, 2 comprises 8 poles realized through eight windings or spools 12 circumferentially disposed and formed by several thousands of coils of superconductive strands comprising magnesium diboride.

All the spools 12 of a stator are connected in series with alternated poles, inserted into a solid metallic and non magnetic structure which encases the windings affording them the required stiffness. The coils and their supporting member and housed in a single vacuum container 13 with a multi-layered thermal insulation. For simplicity's sake, in the Figures only the winding supports 36 are shown, not showing the thermal insulating means, nor the means for applying a current to the stator windings. Just for indicative purpose, a generator motor with a power of 3 MWs and rotating at a speed of 20 revolutions per minute (rpm) can comprise about 8500 coils of a wire having a diameter of about 2 mms *for every spool with a diameter of 400 mms

More precisely, said magnets are formed by coils made of wires comprising a core of Magnesium diboride (MgB₂) with a nickel or aluminium shell.

Said windings are encased in a metallic, thermally conductive and non ferromagnetic support 13? and all the spools 12 of a stator are connected in series with alternated poles and housed in a single vacuum filled container 13 with a multi-layered thermal insulation. For simplicity's sake, in the Figures neither the winding supports??, nor the thermal insulating means, nor the means ???for applying a current to the stator windings have been shown. Just for indicative purpose, a generator motor with a power of 3 MW (Megawatts) and rotating at a speed of 20 revolutions per minute (rpm) can comprise about 8500 coils of a wire having a diameter of about 2 mm for every spool with a diameter of 400 mm.

Thanks to this large number of coils, a very large magnetic field can be produced by a relatively small current, in the order of the 100 A, and therefore a single DC low power feeding unit is enough to realize the interface between the superconductive portion and the conventional conductive portion. Advantageously, thanks to the characteristics of the magnesium diboride, the winding arrangement can be refrigerated and kept at a temperature low enough to ensure a superconductive condition in accordance with the selected superconductive cable, by means of a thermal exchange contact through the metallic support with a single "cryocooler" device 15. Preferably the supporting member of the coils is made of solid aluminium and is held suspended in the vacuum chamber by a set of tie bars or wires (not shown), realized either by metal or a composite material.

As it is well known a cryocooler is a completely closed thermodynamic machine, operated by an incorporated electric motor that transfers heat from one side of the cryocooler, in thermal contact with the winding arrangement, toward the external environment. The cold side of the cryocooler can reach a temperature of some Kelvin degrees although the amount of heat transferred in this way is quite limited, typically to some watts. Since cryocooler devices are known in the art, for example from KR101175938, US2012279234, etc. they will not be further disclosed.

In the illustrated and presently preferred embodiment of the invention, the two magnet stators 1, 2 are facing one another so as to form a toroidal space 16 between them inside which an intense static multipolar axial magnetic field is present.

One of such lines of force of the magnetic field has been shown in Fig. 1 with the reference 17. Since the electric resistance of a superconductor is to all the effects equal to zero, the ampere turns (AT) circulating in the windings 12 are quite large and a very high field density can be obtained in the space between the two magnets (or rather between the arrangements of the windings 12) without a significant power consumption. As a matter of fact, the intensity of the magnetic field in the space between the two magnets is in the order of some Teslas. The two magnets only need one electric connection since they are connected in series to each other through a bridge of cooled superconductors 19. The superconductor zero (null) ohmic loss is employed with advantage to generate a very high stationary field in a large air gap, approximately 40 cm wide for a 2 MW machine, which is exceptionally large when compared with the typical airgaps of a standard or even superconducting generator, which are typically a few mm in the former and a few cm in the latter case.

Thanks to this exceptionally wide air gap and high field in the motor generator according to the invention, both the armature reaction and the consequent eddy current loss in the superconductive coils are minimized. This situation will be further clarified through a numerical example. It is well known that the force acting on a conductor results from the vector product of the current circulating in the conductor and the surrounding magnetic field density vector. On the other hand, the armature reaction on the field wire linearly changes with the current in the conductor and is inversely proportional to the magnetic reluctance of the armature reaction path, i.e. the length of the airgap of the machine.

In conventional machines the main air gap field is in the order of .8 T and the air gap is from 1 to 5 mm.

In the superconductive machine proposed in JP 3 289344 (Aisin Seki and others) the main field is assumed to be in the 1 T region and the airgap is a few cm.

The motor generator according to the invention uses a field which can be obtained with magnesium diboride windings, and with the proposed geometry, between 3 and 5 T over a 40 cm airgap, thus realizing an armature reaction intensity, per unit torque, about 400 times less than conventional machines and still lower by an order of magnitude than the proposed, but never realized, previous suggestions.

According to an alternative embodiment the property of null resistance of the superconductive windings is exploited for short-circuiting - through an electric bridge also made of superconductive material - the windings after the current circulation has been established, thus providing a permanent magnet that doesn't need any power supply as long as the wires are maintained at a low temperature.

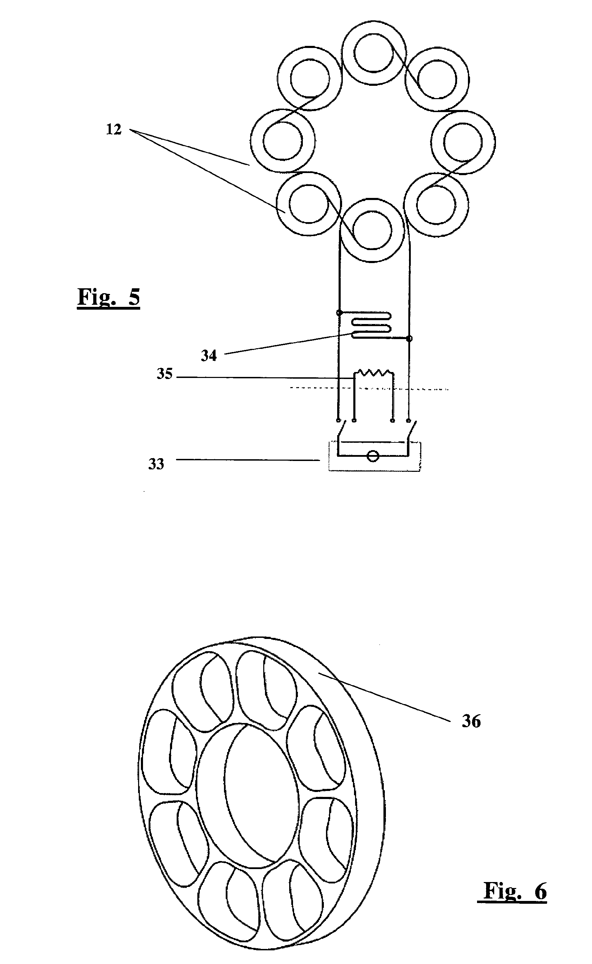

This device is schematically represented in fig 5 which represents the series of the superconductive coils 12, which apart from the connection to the outside DC power supply 33, also show a short circuit connection 34 internal to the cooled cavity and realized with an appropriate length of superconductive wire coiled in a small space and connected with a low power heater 35. The operation of the superconductive switch is as follows. During magnet initialization, the main coils 12 are cooled below the transition temperature and thus become superconductive, while the shorting coil 34 is kept just above the transition temperature by the heater 35 and is therefore not superconductive. The length of the coil 34 is chose in order to realize an appreciable ohmic resistance, for example a length of 10 m of magnesium diboride wire with section 1 square mm would realize an ohmic resistance of about 1 ohm.

The external power supply 33 feeds the coils with a low voltage, e.g. 1 V, which is sufficient to gradually increase the current in the superconductive coils while keeping loss in the shorting coil to a minimum, in this case, 1 W.

Even considering the extremely high inductance of the main coils, which can be in the order of 100 H, in a matter of a few hours the required current level is achieved in the main coils 12. At this point the voltage supplied by the supply 33 drops to almost zero as the current must not change in the coils and the loss in the shorting coil 34 is also null. The heater 35 is turned off and the shorting coil transitions to superconductivity.

In this state, the current flow in the main coils is stabilized and the external power supply 33 can be removed or turned off; the main coils do not require power to supply the magnetic field until the temperature in the cavity is below transition. The power loss in the feeders is also avoided thus reducing the cooling power required.

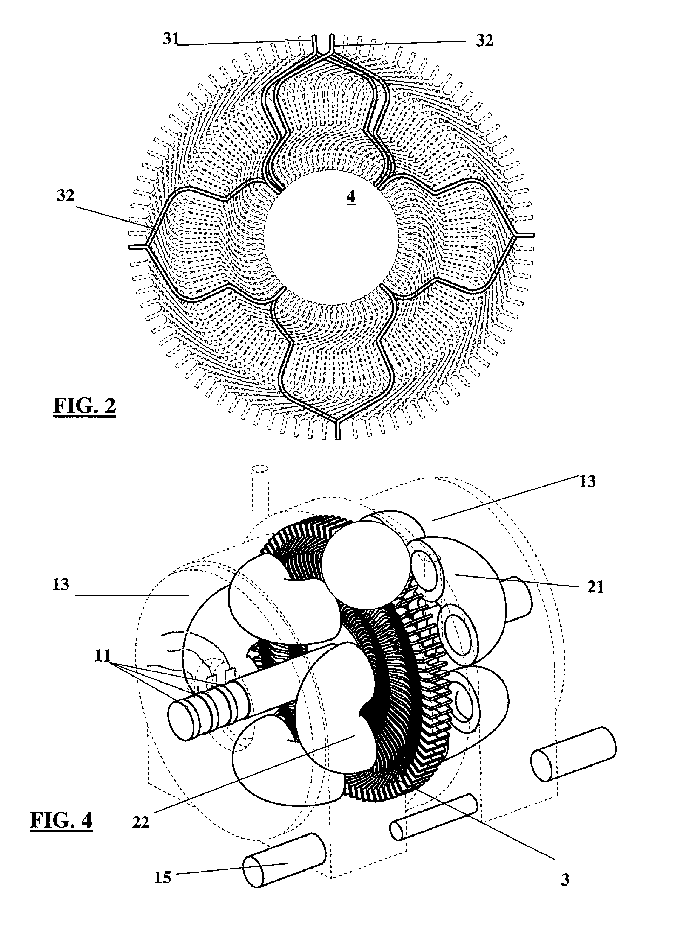

The construction of the discoid rotor 3 is better shown in Figures 2 and 3. The supporting disk 4 is of a non conductive material, not ferromagnetic, such as a glass-polyester compound, and carries a number of circumferentially off-set conductive coils 31, 32... disposed according to a multiphase (typically three-phase) flat winding with the same number of poles of the superconductive magnets.

The ends of the windings are connected through a shaft 5 to a group of slip rings 11 positioned outside of the magnets 1, 2. When the machine according to the invention operates as a generator, the rings 11 serve to make available outside the generator the EMF generated on the windings of the rotor 12, while when the machine operates as motor they serve for applying the motor feeding voltage.

The illustrated machine is therefore a synchronous axial gap tree-phase machine, without iron, in which the armature winding rotating in the very strong magnetic field produced by the superconductive windings generate a back EMF force proportional to the speed of rotation. The EMF is generated on the rotor windings and accordingly slip rings 11 are used to transfer a current from the generator/motor to the machine terminals or vice versa.

Thanks to the disclosed arrangement, the machine according to the invention achieves a very high intensity of the magnetic field in a large volume airgap without a significant consumption of power, so that a limited number of coils formed by of large section conductors in the rotor armature are capable to capture an appreciable voltage, and consequently both the electric and volumetric efficiencies are quite high. Another advantage of the invention derives from the fact that an ironless rotor, or rather a rotor support that doesn't contain ferromagnetic elements, results free from magnetic attraction but for torque generation. Therefore the disclosed machine doesn't develop the strong attraction forces of all the electric machines which forces dictate rigid mechanical structures of large dimensions. On the contrary, in the disclosed machine the only force acting on the rotor armature is the machine torque.

This way the invention provides a simplified and low cost structure by minimizing the complexity of the superconductive portion, and maintaining it stationary.

Although not illustrated with details in the drawing a further embodiment of the invention provides for the addition of portions 16 of soft iron to the rear part of the superconductive windings, or in their cores, for further increasing the magnetic field or to increase the mechanical rigidity of the structure, as well as to reduce the amount of the parasitic (leakage) field surrounding the machine.

The armature can be air or water cooled, or simply located inside a container filled with a non conductive refrigerant liquid as shown in Fig. 3. This cooling choice is particularly effective in low speed generators such as those used in the eolic field.

According to an alternative embodiment of the invention, the rotor armature is realized with conductors having a solid cross section varying so as to maximize the rotor efficiency, with each conductor being realized through forging or casting thanks to the very small number of coil turns requested in this configuration. In fact, an axial winding suffers from limited conductor filling factor, because if the conductors have constant cross section, conductors which fill completely the rotor wheel at the inner diameter leave an unfilled space at the outer diameter equal to the difference of the two radiuses multiplied by 2 times n. In the proposed invention, however, the high field and the very low frequency (typical values for a 3 MW eolic generator would require 30-40 turns/phase and 1-2 Hz frequency) allow the design of cast coil pieces, which are joined or bolted at each half coil end. Such cast parts are not subject to the constant cross section constrain of wires and can therefore fill all the space allotted to the armature except for the insulation, thus realizing lower armature resistance and higher efficiency.

According to another embodiment of the invention shown in Fig. 4, as superconductive magnets one can use cut toroidal coils 21, 22. Although this embodiment is more difficult to be realized, it minimizes the amount of the leakage field around the machine and further optimizes the peak field/average field ratio, and thus allows a more efficient use of the superconductive wire. More precisely the spools superconductive coils are arranged according to a chain of cut toroids for minimizing the generation of leakage field around the machine and to further increase the field density in the airgap. By arranging the superconductive windings 12 according to a chain of half-toroids so as to create a magnetic field tunnel wandering through the axial airgap crossing it as many times as the number of the machine poles, the generation of the leakage field is minimized around the machine and the field density of the airgap is further increased.

## Claims

1. A synchronous motor/generator comprising:
- two multipole and coaxial magnet stators (1, 2), spaced-apart and facing to one another, each comprising a plurality of circumferentially arranged superconductive windings (12), said windings being connected in series with alternating poles and fed by a DC source for generating a multipole axial magnetic flux (17);
- a disc-shaped rotor (3) coaxially located between said stators (1, 2);
- a machine shaft (5) mechanically connected to said disc-shaped rotor (3), **characterised in that**
each of said stators (1, 2) are encased in a metallic, thermally conductive and non ferromagnetic support (36), housed in a single vacuum filled and insulated container (13) kept at a cryogenic temperature and cooled by conduction through the metallic support by the use of cryoccolers without using gases or liquid coolants;
and **in that** said rotor (3) comprises a supporting discoidal central member (4) of a non conductive and non ferromagnetic material, and a plurality of circumferentially staggered conductive coils (31, 32) arranged in a multiphase flat winding with the same number of poles of said superconductive magnets,
and **in that**
said machine shaft (5) further comprises a set of slip rings (11) positioned connected to said windings (12) to make available outside the generator the EMF generated on the rotor coils (31,32), respectively to apply a supply voltage to the motor, said rotor being housed inside a container (3) in which a cooling fluid flows.

2. A synchronous motor/generator as claimed in claim 1, **characterized in that** said magnets (1, 2) are formed by coils made of wires comprising a core of Magnesium diboride (MgB₂) with a nickel or aluminium shell

3. A synchronous motor/generator as claimed in claim 1 or 2, **characterized in that** the supporting member of the coils is made of solid aluminium and is held suspended in the vacuum chamber by a set of tie bars or wires, realized either by metal or composite material;

4. A synchronous motor/generator as claimed in claim 3, **characterized in that** each of said insulated coils and supports (13) is cooled by conduction through a cryocooler device (15).

5. A synchronous motor/generator as claimed in claims 1 to 2, **characterized in that** said windings (12) can be short-circuited by means of a strand of superconductive wires and that said DC source is not permanently connected to said coils (12)

6. A synchronous motor/generator as claimed in claim 1, **characterized in that** stator windings (12) are disposed in a chain of half-toroids so as to create a magnetic field tube that wander through said axial airgap as many times as the number of machine poles.

7. A synchronous motor/generator as claimed in claim 1, **characterized in that** said rotor armature is made of variable cross-section solid conductors.

8. A synchronous motor/generator as claimed in claim 1, **characterized in that** said magnet stators (1, 2) are thermally connected to one another by a superconductive bridge (19) so as to use only two current descents for the whole machine.
